# EUROPEAN PATENT APPLICATION

(11) **EP 1 880 908 A2**
(43) Date of publication of application: **23.01.2008**
(21) Application number: 07252826.8
(22) Date of filing: 17.07.2007
(51) Int. Cl.: B60R 22/32, B60N 2/64, B60N 2/68, B60N 2/70, B60R 22/02, B60R 22/26

(54) **Seat assembly with multiple independent seat belts**

(30) Priority: 18.07.2006 US 831631 P
(71) Applicant: Global Seating Systems LLC, Exton, PA 19341 (US)
(72) Inventor: Whitman, Gary, Jamison, PA 18929 (US); Hammarskjold, Christian U., Devon, PA 19333 (US); Butch, Frank J., Weat Chester, PA 19380 (US); Howard, Jim, Perkasie, PA 18944 (US)
(74) Representative: Belcher, Simon James

(57) **Abstract**

A seat assembly for a vehicle comprises a seat having a seat belt assembly comprising two or more seat belts, a latch attached to each seat belt, and a corresponding buckle. Each buckle releasably engages each corresponding latch in a corresponding housing. A release mechanism is provided remote from each housing, for disengaging each seat belt latch from its corresponding buckle. For certain seat assemblies with at least three seat belts, the first seat belt and the second seat belt are mounted on the seat back, and the third seat belt is mounted free of the seat back. Each of the three seat belt latches can be capable of being disengaged independent of the other two seat belt latches, and each of the three seat belts has a retractor which pulls the corresponding seat belt to a retracted position when its buckle is disengaged from its corresponding latch.

## Description

This invention relates to a seat with multiple independent seat belts, and more particularly to seats having multiple seat belts and a single latch release.

Seats used in military, off-road and other heavy transportation vehicles have unique and specialized requirements. Occupants of such seats may encounter crashes, mine blasts or other dynamic events where it is important to secure the occupant to the seat and to have the occupant properly positioned in the seat. Known seat belt systems fail to hold the seated occupant in a desirable position during such dynamic events. In addition, such seats may need to accommodate unusual geometries beyond just a seat occupant, such as soldiers in the field who carry large amounts of equipment. The equipment can include, for example, backpacks (for example for carrying a quantity of drinking water or another liquid), canteens, radios, flack vests, night vision devices, grenades, flashlights, side arms, knives, ammunition, etc. Similarly, workers in some other applications, such as mining, are required to wear equipment around their waists or on their back. Wearing this required equipment changes the contour of the seated occupant. Conventional seating systems and seat belt restraints do not readily accommodate such unusual body profiles. The seated occupant with such equipment is forced to sit in an unsupported, non-ergonomic seating position and their equipment affects how seat belts lay across the body. Further, seated occupants of such vehicles may need to egress rapidly (such as, for example, a soldier in a battle) and cannot afford to have seat belts snag on their equipment. It would be desirable to provide a seat assembly which is modular, allows for ready and quick egress and which accommodates irregular geometries. It would also be desirable to provide a seat assembly with an enhanced seat belt design which addresses the aforementioned difficulties.

In accordance with a first aspect, a seat assembly for a vehicle comprises a seat having a seat belt assembly comprising two or more seat belts, a latch attached to each seat belt, and a corresponding buckle, in which each buckle releasably engages each corresponding latch in a corresponding housing, and a release mechanism which can be located remote from each housing, in which actuation of the release mechanism disengages each seat belt latch from its corresponding buckle. For certain seat assemblies with at least three seat belts, the first seat belt and the second seat belt are mounted on the seat back, and the third seat belt is mounted free of the seat back, each of the three seat belt latches are capable of being disengaged independent of the other two seat belt latches, and each of the three seat belts has a retractor which pulls the corresponding seat belt to a retracted position when each buckle is disengaged from each corresponding latch.

The seat assembly of the invention has particular advantages when used in applications which include military, off-road and other heavy transportation vehicles.

Embodiments of the invention will now be described by way of example with reference to the accompanying drawings, in which:
Fig. 1 is a perspective view of a seat assembly in accordance with a preferred embodiment, showing a seat assembly with a locked seat belt assembly.
Fig. 2 is a perspective view of the seat assembly of Fig. 1 with bolsters and arms removed.
Fig. 3 is a perspective view of the seat assembly with the bolsters attached but the arms and centre panel removed.
Fig. 4 is a back view of the seat assembly showing the centre panel secured to a back side of the seat back.
Fig. 5 shows the seat assembly with the seat cushions removed, revealing a cable assembly connected between the seat belts and a single point seat belt release.
Fig. 6 shows the seat assembly of Fig. 5 with the seat belts unlocked.
Fig. 7 is an exploded perspective view of a preferred embodiment of the latch assembly.
Fig. 8 is a front side view of the latch assembly with a handle pivoted about 110° from a resting position.
Fig. 9 is a side view of the latch assembly with the handle at the resting position and with a pivot bracket yet to pivot.
Fig. 10 is a side view of the latch assembly with the handle pivoted about 80° from the resting position and with a pivot bracket yet to pivot.
Fig. 11 is a side view of the latch assembly with the handle pivoted about 100° from the resting position and the pivot bracket pivoted about 20°, urging cables to move to unlatch the seat belt assembly.
Fig. 12 is an alternative preferred embodiment of a seat assembly shown to accommodate irregular environments.
Fig. 13 is a side view of the seat assembly of Fig. 12.

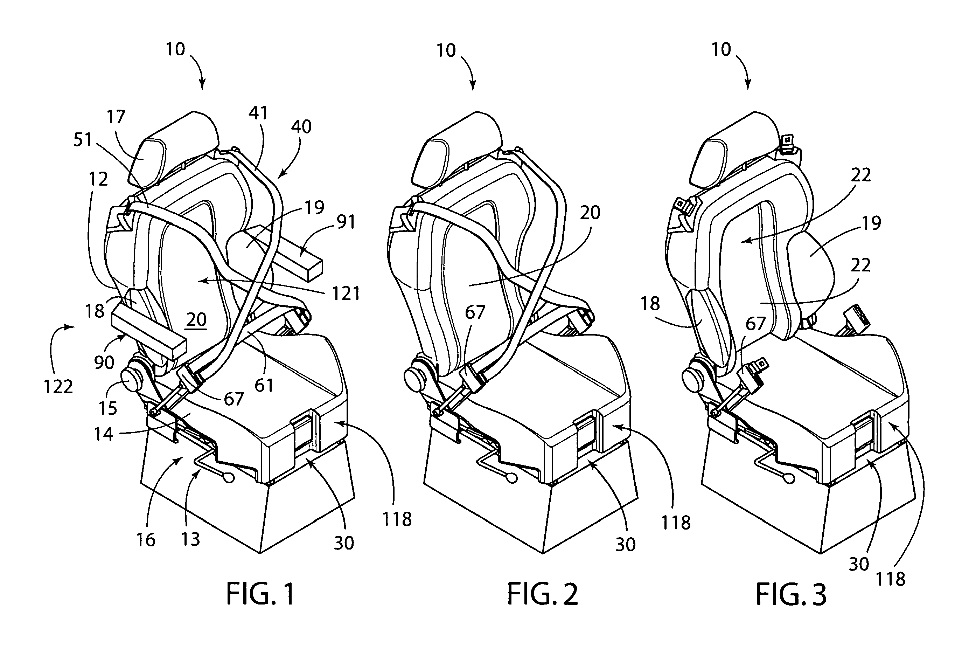

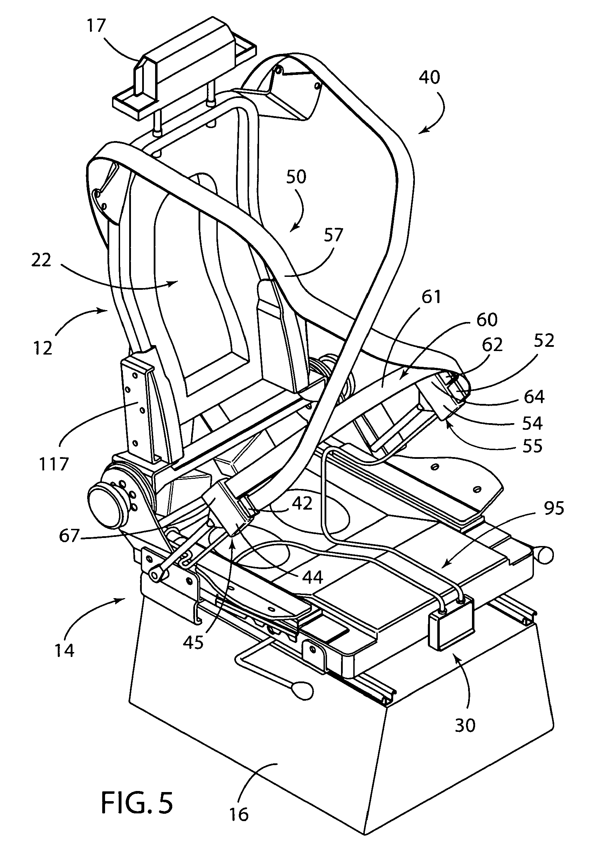

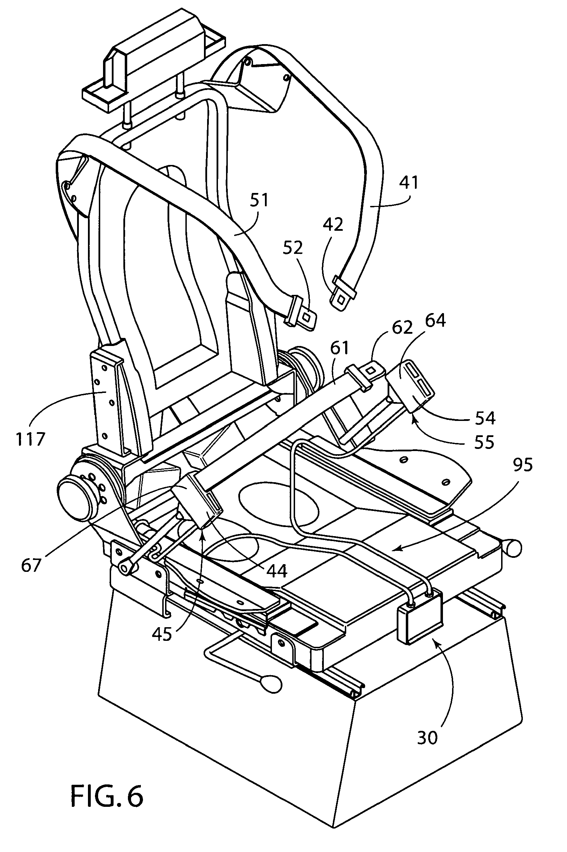

Referring to the drawings, Fig. 1 shows a seat assembly 10 in accordance with a preferred embodiment for use in military vehicles and the like. The seat assembly has a seat back 12, a seat base 14, and a seat pivot 15 permitting the seat back to pivot with respect to the seat base. The seat base 14 is preferably mounted on a seat stand 16 which is in turn attached to the vehicle. The seat base may be adjustable with respect to the seat stand with a seat slide adjuster assembly 13. The seat assembly may also be provided with a head rest 17, arms 90, 91 and bolsters 18, 19. Bolsters are shown in Figs. 1, 3 and 4 as cushioning projections extending generally away from the seat back 12 and towards the front side 121 of the seat back, and above the seat base 14 so as to protect the kidney area of a seat occupant properly positioned in the seat. In accordance with a highly advantageous feature, both the arms 90, 91 and bolsters 18, 19 may be bolt-on and removable. The lower side bolsters provide additional side to side support and protection of an occupant, and help keep the occupant contained. By having the ability to bolt on lower side bolsters, fleets of seating assemblies may be standardized on one seat that is readily adaptable to both combat operations and combat support roles, as well as to other situations. It is preferable to have a seat assembly with adequate side bolstering positioned lower on the seat back generally adjacent a seat occupant's kidney/hip area, such as at mounting bracket 117 shown in Figs. 5 and 6. Removal of the bolsters helps accommodate canteens, sidearms and other equipment positioned near the waist of a seat occupant.

Soldiers in combat operations are required to wear very specific equipment including, but not limited to canteens or other containers for liquids (which might be carried in a backpack), radios, flack vests, ammunition, radios, etc. Soldiers in combat support roles often do not have to wear the same equipment. As such they do not need the sculpted backrest to accommodate their seating posture. A removable centre panel 20 is provided on a front side 121 of the seat back 12. The centre panel may advantageous be flipped over to the back side 122 of the seat back and fastened again. Removal of the centre panel helps accommodate backpacks and other bulky and unusual equipment and helps position the seated occupant's H-point closer to where the seat's designers intended.

A seat belt assembly 40 comprises several seat belts; two shoulder belts 41, 51 and one lap belt 61, each provided with a corresponding latch 42, 52, 62 (seen in Fig. 6) which engages a corresponding buckle 44, 54, 64. The shoulder belts are shown to cross over one another, forming an "X" pattern. Preferably the seat belt assembly is formed as an "all-belts-to-seat" design, where the seat belts are anchored on the seat back and seat base, but not to the surrounding vehicle. This can make it easier to install the seat as a complete module during assembly and provides a safer, more secure seat assembly in that the belts move with the seat as opposed to being fixed to the vehicle body. In accordance with an advantageous feature, each seat belt may be unbuckled individually or a single release mechanism 30 may be used to unbuckle all seats essentially simultaneously. The release mechanism may be mounted anywhere proximate the seat assembly, either on the seat assembly or nearby. As shown in the drawings, release mechanism 30 is mounted on a front side 118 of the seat base 14.

Fig. 2 shows seat assembly 10 with bolsters 18, 19 and arms 90, 91 removed. Preferably for the combat support roles, the removable centre panel 20 would remain in place. This allows persons with the above mentioned equipment to be ergonomically placed in a seat where otherwise they would be forced forward of the natural seating position and placed in an unsuitable or partially supported seating position. Fig. 3 shows the centre panel removed leaving pocket or opening 22. The seat belts 41, 51, 61 are also removed for clarity of illustration.

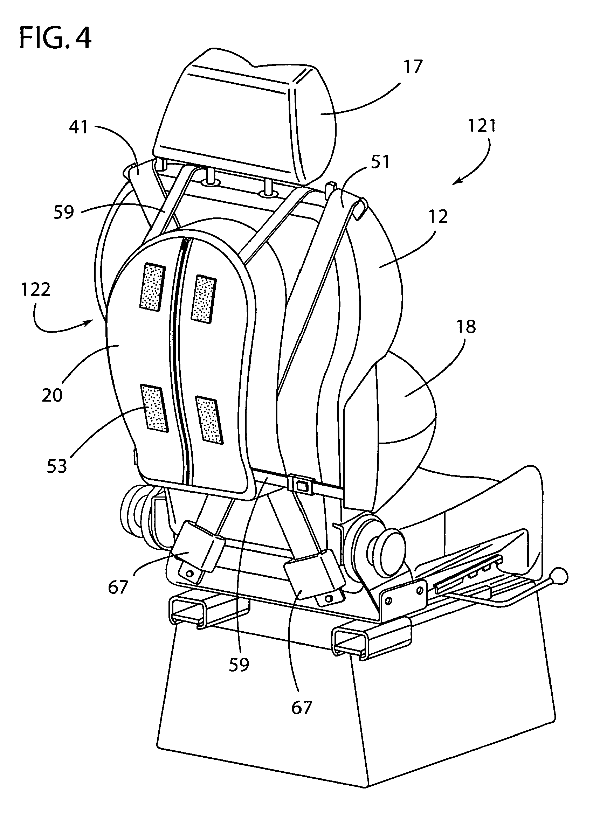

Fig. 4 is a view from the back side 122 of the seat with the removable centre panel 20 removed from the front side 121 and attached to the seat back 12. The centre panel 20 can be removed to accommodate any gear worn on a user's back, such as a back pack (which might include a container for drinking water or another liquid). Ideally, the removable centre panel 20 is connected to the seat back 12 by a fastening assembly which can comprise, for example, straps 59 mounted on the seat back 12. These straps allow the removable centre panel to be flipped over the back side 122 of the seat back and secured in place helping to keep the centre panel from being lost. The fastening assembly can further comprise strips 53 of the hook part of a hook and loop fastener (such as that sold under the trade mark Velcro) affixed to the centre panel 20 which releasably adhere to a receiving area such as a cloth or fabric on the surface of the seat back in the pocket 22 and thereby releasably secure the centre panel to the front side 121 of the seat back. The hooks and loops provided by the strips 53 and the receiving area may be reversed. Alternative fastening assembly components can comprise clips, snaps or other mechanical fasteners, for example. Retractors 67 are shown which each separately retract a corresponding seat belt 41, 51 to a retracted position. Each retractor is a spring loaded device which pulls a corresponding belt to wrap away from the corresponding buckle, advantageously removing the seat belt as an obstacle for egress and ingress to and from the seat assembly.

During crashes, mine blasts, or other dynamic events, it is very important to securely couple a seated occupant to the seat assembly. Reducing dynamic amplification is strongly correlated with increased occupant survivability and injury reduction. To help protect seat occupants a multi-point seat belt restraint system or assembly 40 is provided mounted to a rigid seat assembly. The shoulder belts 41, 51 cross over the occupant's chest and are latched to corresponding seat belt buckles 44, 54, respectively, near the occupant's hip point, thereby forming an "X" across the chest. More specifically, a housing 45 receives a retractor 67 for belt 61 and buckle 44 for latch 42. Second housing 55 accommodates both buckle 54 for latch 52 and buckle 64 for latch 62. Within the housings 45, 55 the buckles releasably engage the corresponding latches. The retractor 67 contains the lap belt 61 in a rolled up state or retracted position when the belt 61 is disengaged from latch member 54 and released by an occupant. Preferably as shown in the Figs. each seat belt is provided with its own retractor 67. Advantageously, making each seat belt independently retracted and discontinuous eliminates belt loops which can catch equipment worn by a seat occupant.

Each seat belt is independent and discontinuous of the other belts in the sense that each may be individually disengaged, that is the belts (such as one of the shoulder belts and the lap belt) are not connected to one another, and discontinuous in that the belts do not form a loop (as for example, a loop formed by connecting a shoulder belt to a lap belt). Providing seat belts in this manner is advantageous in that it helps distributes load and more securely holds a seated occupant to a seat in a crash, mine blast, or other dynamic event. Independent seat belts are also less likely to snag on body worn equipment during egress. Continuous loop belts, on the other hand, can snag on equipment or occupant's shoulders as the occupant rushes to egress a vehicle. Further, such an alignment of seat belts aids in the compartmentalization of the occupant in a side impact, mine blast or other dynamic event.

One problem with any multiple independent seat belt assembly is that the occupant must release multiple seat belts to get out of the seat. This extra effort increases egress time. For some situations, such as soldiers in combat theatres, quick egress time is crucial. In these environments, it is preferable to have a single point release mechanism which allows a seat occupant to disengage all seat belts essentially simultaneously. As shown in Figs. 5-6, the buckles 44, 54, 64 are linked together via a connecting assembly which is in turn connected to a release mechanism 30. As shown in the Figs., the connecting assembly is a cable assembly 95, but may also comprise, for example, electrical connectors, pneumatic connectors or other mechanical connectors, or a combination thereof, etc. Ideally, the single point release mechanism location is positioned remote from the buckles and from the seat belts such that it is easily reached by a seated occupant. Remote is understood here to mean that the release mechanism is not in direct contact with the housings which contain the buckles and corresponding latches when engaged to the buckles. One suitable remote location is the front of the seat cushion bottom assembly. A seat occupant can bend over to actuate the release mechanism. The release mechanism may also be mounted in a position where it is not attached to the seat. It is also desirable to avoid unintentional actuation of the release mechanism.

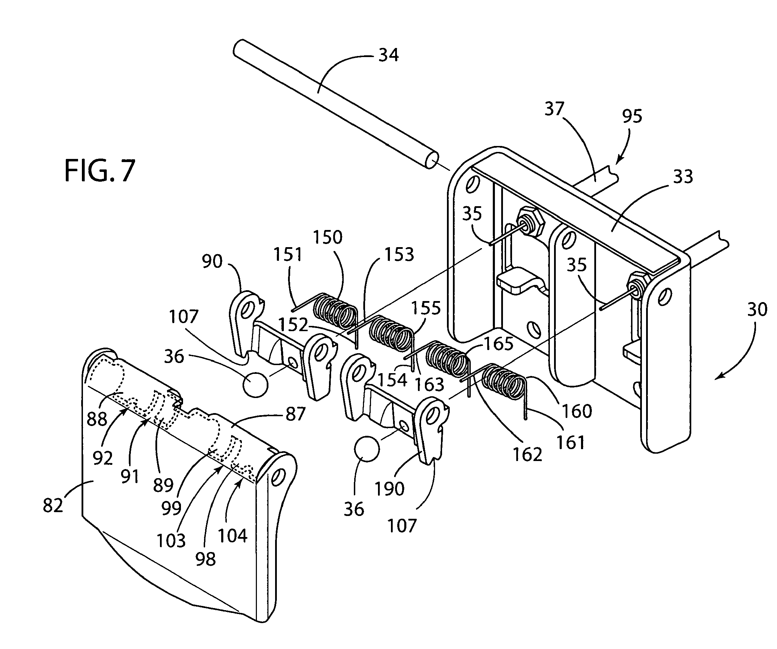

Figs. 7-11 show a preferred embodiment of a release mechanism 30 which accommodates these competing design constraints. The release mechanism comprises a handle 82 and at least one pivot bracket 90. As shown in Fig. 7, two pivot brackets are used, one for each latch member 44, 55. Both the handle 82 and the pivot brackets 90, 190 are pivotably mounted around pivot pin 34 positioned on housing 33 which is in turn affixed to the seat base. In this two cable design the cable assembly 95 comprises two cables 35, each preferably with a cable sheath 37, two pivot brackets 90, two springs 150, 155 and 160, 165 for each pivot bracket. Spring 150 has ends 151 and 152, spring 155 has end 153. In a similar manner, spring 160 has ends 161 and 162, and spring 165 has end 163. Landings 107 on each pivot bracket are adapted to receive a respective corresponding end 151, 161 of spring 150 and 160. Cable end balls 36 operatively connect the cables to the corresponding pivot brackets. There is a curved portion 87 of the handle 82 which wraps around the pivot pin 34. The curved portion 82 of the handle has two teeth 88, 89 with a space 91 between the teeth in the middle. One of the teeth 88 of the curved portion 87 (far left in Fig. 7) has a small visible recess 92. In a similar manner, teeth 98 and 99 are separated by a space 103, and tooth 98 has a small recess 104.

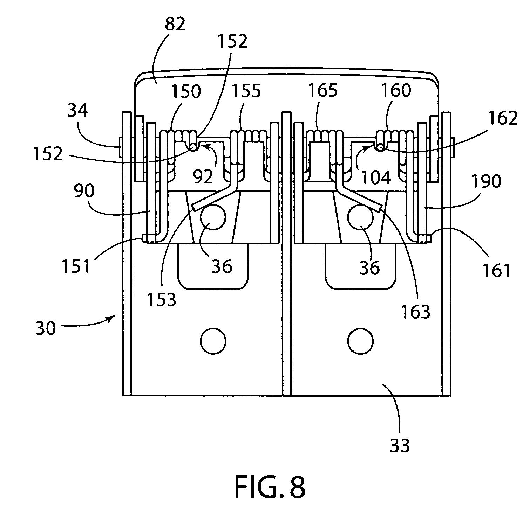

Fig. 8 shows the release mechanism assembled with the handle 82 pivoted up. Each spring 150, 160 and 155, 165 is positioned around the pivot pin 34. Recess 92 receives an end 152 of the spring 150. The other end 151 of spring 150 is positioned on pivot bracket 90. In a similar manner, recess 104 receives an end 162 of the spring 160. The other end 161 of spring 160 is positioned on pivot bracket 190. Spring 155 has spring connection end 153 positioned on the pivot bracket 90 and spring 165 has spring connection end 163 positioned on the pivot bracket 190. The connection ends 153, 163 preferably comprise a fairly lengthy projection from the part of each spring that wraps around the pivot pin. Most preferably the ends sit in a recess in the corresponding pivot bracket. One end 153, 163 of springs 155, 165 continuously biases the pivot brackets back toward a latched position. Springs 155, 165 also provide a different tactile sensation to a seat occupant, making it somewhat more difficult to disengage the seat belts from the seat belt latch members.

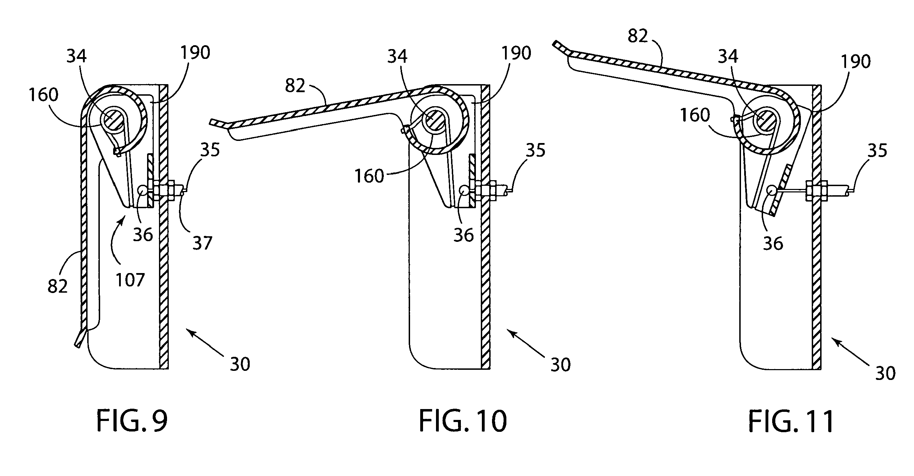

Figs. 9-11 show the operation of the release mechanism 30. The handle 82 moves between a rest position (Fig. 9), an intermediate position about 80° from the rest position (Fig. 10) and an unlatching position about 100° from the rest position (Fig. 11). Pivoting of the handle 82 pulls on the cables which in turn allow the seat belt buckles to be disengaged form the corresponding seat belt latches. Separation of the handle 82 and the pivot brackets 90 advantageously allows for significant pivot of the handle prior to applying tension on the cables. This is a highly advantageous feature which helps to prevent inadvertent release of the seat belt assemblies due to unintentional contact with the handle.

Pivoting of the handle 82 to the intermediate position causes the curved portion of the handle to engage the springs 150, 160. At 80° all of the slack in the spring around the pivot pin 34 is taken up, but the pivot brackets 90, 190 has not yet pivoted. So at rest and at 80°, the pivot brackets 90, 190 are in the same position with respect to the pivot pin, but the handle has moved.

Additional movement of the handle from the intermediate position to the unlatching position begins to move the pivot brackets. This is accomplished by springs 150, 160, which urge the pivot brackets 90, 190 to rotate about the pivot pin. Cable end balls 36 are captivated by the pivot brackets, and move with the corresponding pivot bracket. This in turn pulls the cables, allowing for unlatching of the seat belts from their corresponding latch members. For movement of the handle between 80-100° with respect to the rest position, the handle has pivoted about 20°, and so do the pivot brackets. Pivot brackets move between an unlatching position (Fig. 11) and a latching position (Figs. 9-10). In accordance with a highly advantageous feature, the individual seat belts may still be released from the corresponding latch members 44, 54 even if the single point release mechanism fails. Push buttons readily apparent to those skilled in the art may be provided to disengage each latch independent of cable assembly 95 actuation.

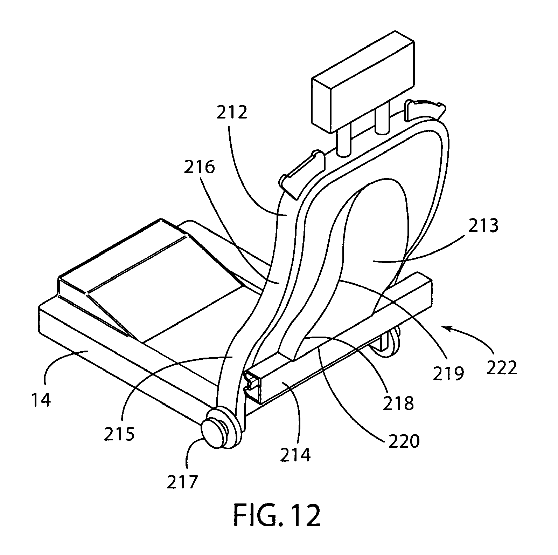

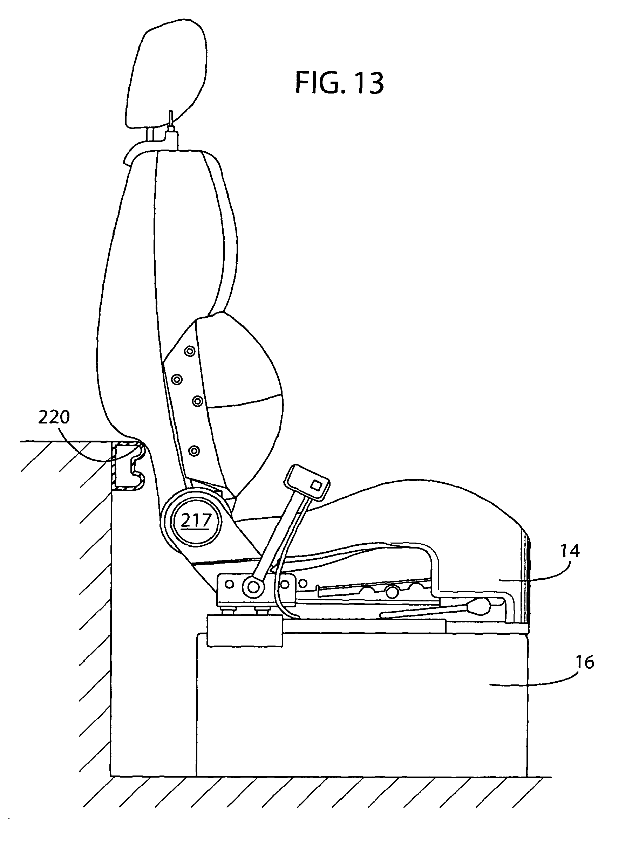

Fig. 12-13 show another preferred embodiment of a seat assembly design to accommodate irregular geometry. In particular, in some vehicles a B-beam 214 may intrude into a vehicle compartment, limiting the dimensions of the seat. In accordance with a highly advantageous feature, the seat assembly 210 may be modified to accommodate such a B-beam. B-beam 214 is affixed to the vehicle and serves as a structural member positioned on the back side 22 of the seat assembly. The seat back 212 has a portion 213 defining a pocket extending away from the seat base 14 and towards the back side 222. As discussed above, the pocket accommodates a backpack (for example for carrying drinking water or other liquid) and would sit above the B beam to increase rearward adjustment. The portion 213 defining the pocket has a bottom 220 which ends abruptly at the B-beam 214. The rest of the seat back 212 above seat pivot 217 is formed as a generally curvo-planar member having at least two curves 215, 216. First curve 215 is radiused generally away from the seat base 14 and toward the back side 222 of the seat back to define a recess which can accommodate the B-beam. The bottom 220 of the portion 213 defining the pocket cooperates with the first curve to further define the recess. Above the first curve 215 is the second curve 216 which is radiused generally towards the seat base 14. The portion 213 of the seat back 212 defining the pocket may also have corresponding first and second radiused segments 218, 219 corresponding to and radiused in generally the same direction as curves 215 and 216, respectively. None of the radiused curves need be continuous along a single radius. As shown in the drawings, the seat back advantageously follows the shape of the body of an occupant and thereby provides uniform support for the seated occupant. Such a seat back also allows the seat to be adjusted further backwards before striking the B beam than may otherwise be the case. This additional backward motion provides the seated occupant with more leg room, greater comfort and additional safety of moving his head back from potential hazards in the vehicle.

Instead of using just three independent seat belts, each with its own retractor, two, four or five seat belts may be used. A so-called "5 point" harness system may have five independent seat belts (two shoulder belts, two lap belts, and a central crotch strap). Preferably at least four of the seat belts have retractors. The fifth belt, the central crotch strap (also called "anti-submarine") may merely be attached to the seat base or to the seat stand.

## Claims

1. A seat assembly for a vehicle comprising, in combination:
a seat having a seat belt assembly comprising at least two seat belts, a latch attached to each seat belt, and a corresponding buckle, in which each buckle releasably engages each corresponding latch in a corresponding housing; and
a release mechanism located remote from each housing, in which actuation of the release mechanism disengages each seat belt latch from its corresponding buckle.

2. The seat assembly of claim 1 in which the release mechanism comprises a handle, a pivot bracket and a connecting assembly comprising a cable assembly connecting the pivot bracket to each buckle.

3. The seat assembly of claim 2 in which:
the handle is movable between a rest position, an intermediate position and an unlatching position, and the pivot bracket is movable between a latching position and an unlatching position, and in the unlatching position the cable assembly urges each buckle to be unlatched from the corresponding seat belt latch; and
the pivot bracket stays in the latching position as the handle moves between the rest position and the intermediate position, and movement of the handle between the intermediate position and the unlatching position urges the pivot bracket to move to the unlatching position.

4. The seat assembly of claim 2 which includes a pivot pin, in which both the handle and the pivot bracket pivot about the pivot pin.

5. The seat assembly of claim 3 in which the handle pivots about 80° between the rest position and the intermediate position.

6. The seat assembly of claim 3 in which the pivot bracket pivots with the handle as the handle pivots between the intermediate position and the unlatching position.

7. The seat assembly of claim 3 in which the cable assembly comprises a second cable and the release mechanism further comprises a second pivot bracket, with the second pivot bracket operatively connected to the second cable.

8. The seat assembly of claim 1 which includes a seat back and a seat base, in which the seat back can pivot with respect to the seat base.

9. The seat assembly of claim 8 in which the seat base is adjustably mounted on a seat stand.

10. The seat assembly of claim 9 in which the release mechanism is mounted on the seat base.

11. The seat assembly of claim 1 in which the a first seat belt is a shoulder belt, a second seat belt is a shoulder belt, a third seat belt is a lap belt, and one of the shoulder belt latches and the lap belt latch engage corresponding buckles in the same housing.

12. The seat assembly of claim 2 in which a connecting assembly connects the pivot bracket to each buckle and comprises one of a cable assembly, electrical connectors, pneumatic connectors and mechanical connectors.

13. The seat assembly of claim 1 in which each seat belt has a retractor which pulls the corresponding seat belt to a retracted position when each buckle is disengaged from each corresponding latch.

14. The seat assembly of claim 1 in which each seat belt latches is capable of being disengaged independent of the other seat belt latches.

15. The seat assembly of claim 1 in which the seat belt assembly comprises at least three seat belts with a latch attached to each seat belt, and a corresponding buckle, in which each buckle releasably engages each corresponding latch, the first seat belt and the second seat belt are mounted to the seat back, and the third seat belt is mounted free of the seat back; in which each of the three seat belt latches is capable of being disengaged independent of the other two seat belt latches; and in which each of the three seat belts has a retractor which pulls the corresponding seat belt to a retracted position when each buckle is disengaged from each corresponding latch.

16. The seat assembly of claim 15 in which the first belt and the second belt cross one another when the first latch is engaged to the first buckle and the second latch is engaged to the second buckle.

17. The seat assembly of claim 15 which includes a fourth seat belt non-releasably engaged to a corresponding buckle.

18. The seat assembly of claim 17 in which the first belt and second belt are mounted on the seat back, and the third belt and fourth belt are mounted on the seat base.

19. The seat assembly of claim 17 which includes a release mechanism, in which actuation of the release mechanism essentially simultaneously disengages each of the first three seat belt latches from the corresponding buckles.

20. The seat assembly of claim 15 which includes a fourth seat belt, a fourth latch attached to the fourth seat belt, and a corresponding buckle, in which the buckle releasably engages the fourth latch, and a fifth seat belt non-releasably engaged to a corresponding buckle.

21. The seat assembly of claim 20 in which the fourth seat belt has a retractor which pulls the corresponding seat belt to a retracted position when the fourth buckle is disengaged from the fourth latch.

22. The seat assembly of claim 20 in which the fourth seat belt latch is capable of being disengaged independent of the other seat belt latches.

23. The seat assembly of claim 20 which includes a release mechanism, in which actuation of the release mechanism essentially simultaneously disengages each of the first four seat belt latches from the corresponding buckle.

24. The seat assembly of claim 1 in which the release mechanism is attached to the seat base and actuation of the release mechanism disengages each seat belt latch from its corresponding buckle.
